# EUROPEAN PATENT SPECIFICATION

(11) **EP 3 357 605 B1**
(45) Date of publication and mention of the grant of the patent: **08.07.2020**
(21) Application number: 18150709.6
(22) Date of filing: 09.01.2018
(51) Int. Cl.: B22F 9/00, B22F 3/105, B22F 3/24, C22C 19/03, C22F 1/10, B33Y 10/00, B33Y 40/00, B22F 5/00, C22C 1/04

(54) **MANUFACTURING METHOD AND POST-PROCESSING TREATMENT**
HERSTELLUNGS- UND NACHARBEITUNGSVERFAHREN
PROCÉDÉ DE FABRICATION ET TRAITEMENT DE FINITION

(30) Priority: 06.02.2017 GB 201701906
(43) Date of publication of application: 08.08.2018
(73) Proprietor: Rolls-Royce plc, London N1 9FX (GB)
(72) Inventor: Pardhi, Yogiraj, Derby, Derbyshire DE24 8BJ (GB)
(74) Representative: Rolls-Royce plc

(56) References cited:
- EP-A1- 3 034 639
- EP-A1- 3 228 406
- EP-A1- 3 241 634
- GB-A- 2 500 461
- US-A1- 2010 329 876
- US-A1- 2014 034 626

## Description

### Field of the Invention

The present invention relates to a method of processing a component formed by additive layer manufacturing. In particular, the present invention relates to a method of processing a γ'-strengthened superalloy component (e.g. a gas turbine component) formed by additive layer manufacturing to reduce crack formation and enhance high temperature performance of the component.

### Background of the Invention

In the aerospace industry, components manufactured by additive layer manufacturing (ALM) methods can have significant performance and weight advantages over components manufactured by more traditional methods.

Powder bed ALM methods construct components layer by layer by depositing powder on a base plate and then selectively consolidating the powder using a laser or other heat source. These steps are repeated to produce a three dimensional component.

Superalloys are alloys designed for high performance at elevated temperatures and typically have excellent mechanical strength and thermal creep resistance making them especially suited for the formation of turbines and combustors in gas turbine aeroengines. Use of certain superalloys such as precipitation-strengthened nickel superalloys in ALM methods is problematic. These alloys contain high amounts of aluminium and titanium which promote the formation of a γ' intermetallic phase which is highly ordered and thus significantly increases mechanical strength. It also presents a barrier to dislocation motion within the superalloy crystal structure thus improving creep resistance. However, the microstructure which results in these desirable characteristics also results in a brittleness that makes a component formed from the superalloy prone to cracking. In turn, this makes the γ'-strengthened superalloys notoriously difficult to weld and thus difficult to use in ALM methods.

Previous ALM methods using nickel superalloys such as Mar-M-247 have subjected the component to post-ALM processing steps including heating the component in excess of its operating temperature and laser melting the surface of the component prior to subjecting the surface-sealed component to hot isostatic pressing (HIP). This method presents the problem that any gases sealed within the cracks must be dissolved into the alloy upon HIP and are subsequently prone to release from the superalloy at elevated temperatures thus reforming voids within the component.

GB 2506494 discloses a method where a number of post-ALM processing steps are carried out on a low-carbon superalloy nickel component (CM247LC). These processing steps include: loose powder removal; applying a compressive stress to the component using mechanical impact e.g. by peening; hot isostatic processing after reducing the mass of the base plate; solution heat treatment (at 1260°C for 2 hours); and precipitation hardening (at 871°C for 20 hours).

There are a number of disadvantages associated with this known processing method. Firstly, applying a compressive stress to the component may introduce undesired distortion especially in thin-walled components. The application of compressive stress may also result in sub-surface tensile stresses that can promote cracking. When peening is used to introduce the compressive stress, the semi-fused powder particles on the component surface may be folded to form laps on the surface which will hinder non-destructive evaluation of the component. Furthermore, the media size used for introducing the compressive stress may result in blockage of small internal features such as film cooling holes on turbine and combustor components.

The conventional heat treatment parameters used in the prior art HIP, solution heat treatment and precipitation hardening steps result in a non-optimal microstructure i.e. non-optimal distribution of γ' (and carbide) precipitates and thus the high temperature performance of the component is compromised by poor tensile and creep ductility.

EP3034639 relates to additive manufacturing processes using nickel-based superalloys, including subjecting a built component to a finishing process to precipitate a γ' phase of the nickel-based superalloy. GB2500461 relates to making an intermediate product using an additive manufacturing process, including peening the surface of an object made by additive manufacturing. US2014/034626 relates to additive manufacturing of a superalloy component, hot isostatic processing of the component, solution heat treatment of the component and precipitate hardening of the component. US2010/329876 relates to gamma prime nickel-base superalloys and components and treatment including a stabilization style two-step age heat treatment.

It is an aim of the present invention to provide a method of processing a component produced by ALM methods using a precipitation strengthened superalloy that results in a microstructure that is metallurgically stable and results in improved high temperature mechanical strength including reduced creep rupture.

### Summary of the Invention

In a first aspect, the present invention provides a processing method according to claim 1. The inventors have found that hot isostatic pressing of the component at a temperature below the γ' solvus temperature results in the closing of internal abnormalities such as cracks and voids without the risk of incipient melting whilst the subsequent solution treatment above the γ' solvus temperature dissolves the γ' phase and results in a recrystallized and homogenised microstructure with randomly oriented grains. The microstructure obtained has been found to have serrated grain boundaries which are known to improve crack growth resistance of superalloys.

Optional features of the invention will now be set out. These are applicable singly or in any combination with any aspect of the invention.

The γ' solvus temperature and solidus temperature is typically measured using Differential Scanning Calorimetry (DSC). To generate DSC data, heating rates of 10°C/min for measurements may be used.

The HIP may be carried out at a temperature range of 20 to 70°C or 10 to 60°C below the γ' solvus temperature.

For example, where the superalloy is CM247LC which has a γ' solvus temperature of around 1260°C, the HIP of the component may be carried out at a temperature below 1260°C, e.g. at around 1230°C. For example, for CM247LC, the HIP of the component may be carried out in a temperature range of 20 to 70°C below the γ' solvus temperature (e.g. between 1190 to 1240°C).

Where the superalloy is CMSX4 which has a γ' solvus temperature of around 1300°C, the HIP of the component may be carried out at a temperature below 1300°C. For example, for CMSX4, the HIP of the component may be carried out in a temperature range of 10 to 70°C below the γ' solvus temperature (e.g. between 1230 to 1290°C).

Where the superalloy is CMSX486 which has a γ' solvus temperature of around 1310°C, the HIP of the component may be carried out at a temperature below 1310°C. For example, for CMSX486, the HIP of the component may be carried out in a temperature range of 10 to 70°C below the γ' solvus temperature (e.g. between 1240 to 1300°C).

Where the superalloy is IN738LC which has a γ' solvus temperature of around 1170°C, the HIP of the component may be carried out at a temperature below 1170°C. For example, for IN738LC, the HIP of the component may be carried out in a temperature range of 10 to 60°C below the γ' solvus temperature (e.g. between 1110 to 1160°C).

The inventors have found that carrying out the HIP at a temperature below the γ' solvus temperature achieves the required reduction in the voids and crack within the component whilst avoiding any risk of incipient melting during the HIP process. Furthermore, the lower temperature reduces the energy and therefore cost of the HIP process.

The HIP of the component may be carried out for 1 to 4 hours. A pressure of 100-150 MPa may be used.

The subsequent solution heat treatment of the component is carried out at or above the γ' solvus temperature but below the solidus temperature (to avoid incipient melting). For example, where the superalloy is CM247LC which has a γ' solvus temperature of around 1260°C, the solution heat treatment of the component may be carried out at a temperature or above 1260°C. Where the superalloy is CMSX4 which has a γ' solvus temperature of around 1300°C, the solution heat treatment of the component may be carried out at a temperature or above 1300°C. Where the superalloy is CMSX486 which has a γ' solvus temperature of around 1310°C, the solution heat treatment of the component may be carried out at a temperature or above 1310°C. Where the superalloy is IN738LC which has a γ' solvus temperature of around 1170°C, the solution heat treatment of the component may be carried out at a temperature or above 1170°C.

The solution heat treatment may be carried out for between 1-4 hours e.g. around 2 hours.

The surface finishing step is applied to reduce the extent of surface asperities which arise as a result of semi-fused powdered superalloy particles from the ALM method. If not reduced, the surface asperities act as initiation sites for stress-assisted oxidation during subsequent HIP of the component which results in crack formation. Typically such cracks form along grain boundaries but have also been observed along cellular/dendritic boundaries in components manufactured by ALM methods as a result of the high residual stresses arising from the often complex geometry of the components. The surface finishing step also acts to clean the component of loose powder thus eliminating the need for a component cleaning step as required in the prior art method.

The surface finishing may comprise grit blasting. For example, it may comprise grit blasting at a pressure of between 0.2 to 0.4 MPa (30 to 60 psi). This helps to minimise distortion of the component. The grit may be blasted at an angle of 60 to 85 degrees normal to the surface of the component. This has been shown to be effective a removal of surface asperities but also introduces less plastic deformation and therefore less compressive stress/cold work on the surface than the prior art peening step which typically blasts the component surface .

The blasting media may comprise alumina.

The blasting media may have a particle size of approximately 0.18 to 0.063 mm (an 80 to 220 mesh particle size). This particle size is smaller than the peening media used in the prior art and thus introduces less compressive stress. Furthermore, blasting media of the smaller size will pass through internal features such as cooling holes (whilst finishing the internal surfaces) without creating a blockage.

The surface finishing may comprise abrasive flow machining. Such surface finishing is especially useful where component surfaces are not easily accessible.

The surface finishing step may be as described below for the second aspect.

A processing method for processing a component formed by an ALM method using a γ'-strengthened superalloy having a γ' solvus temperature may comprise:
surface finishing the component by blasting the surface of the component using a blasting media at a pressure less than 0.62 MPa (90 psi) and/or at an angle of less than 85 degrees to the surface.

The inventors have found that surface finishing using a blasting media at a pressure less than 0.62 MPa (90 psi) and/or at an angle of less than 85 degrees to the surface reduces surface asperities whilst minimising plastic deformation of the component surface. The inventors have found that this minimises the thickness of a non-load bearing recrystallized layer having a fine grain structure that is prone to formation during subsequent HIP in prior art methods as a result of the cold work/compressive stress applied to the component surface. The fine grain structure of this recrystallized layer is detrimental to creep failure at high temperatures and also to crack growth resulting from oxidative/corrosive processes.

The pressure may be between 0.2 and 0.4 MPa (30 and 60 psi).

The angle may be between 60-65 degrees to the surface of the component.

The blasting media may have a particle size of approximately 0.18 to 0.063 mm (80-220 mesh).

The surface finishing of the second aspect may be followed by the HIP and solution heat treatment of the first aspect.

The inventors have found that applying a two-step aging process comprising a higher primary aging temperature and a lower secondary aging temperature to a component can provide a bimodal distribution of the γ' precipitates with a cuboidal morphology which has been found to improve tensile and creep ductility at high temperatures.

The primary and secondary aging may be carried out in a single heating cycle e.g. by heating the component to the primary aging temperature and then subsequently cooling to the secondary aging temperature.

The primary aging temperature is between 950 and 1120°C.

The secondary aging temperature is between 750-980°C.

The primary aging temperature may be between 980-1100°C where the superalloy is CM247LC whilst the second aging temperature may be 840 to 900°C e.g. around 870°C. The primary aging temperature is between 980-1120°C where the superalloy is CMSX4 whilst the second aging temperature may be 850 to 960°C. The primary aging temperature may be between 980-1120°C where the superalloy is CMSX486 whilst the second aging temperature may be 850 to 980°C. The primary aging temperature may be between 950-1100°C where the superalloy is IN738LC whilst the second aging temperature may be 750 to 900°C.

In some embodiments, the first aging time is shorter than the second aging time. For example, the first aging time may be between 2 to 4 hours e.g. around 4 hours whilst the second aging time may be greater than 16 hours e.g. between 16 to 24 hours.

The inventors have found that the primary aging step produces cuboidal γ' precipitates which is known to improve creep rupture of nickel superalloys. The secondary aging step produces finer γ' precipitates within the matrix formed by the larger cuboidal γ' precipitates. This has been found to increase creep ductility by raising total plastic strain at failure.

In a fourth aspect, the present invention provides a method of manufacturing a component according to claim 7.
The superalloy may have a low carbon content e.g. between 0.03 to 0.08 %. The superalloy may be CM247LC.

The powdered material may have a particle size of between 15 and 60 µm (microns). This has been found to minimise surface roughness of the component which supresses crack initiation during the processing method.

The energy beam (e.g. laser) may be moved in any known scan pattern. For example, the energy/laser beam may be moved in a scan pattern and at a scan speed as disclosed in GB2506494.

The component may be a turbine or compressor component such as a blade or stator for use in a gas turbine aero-engine.

### Brief Description of the Drawings

Embodiments of the invention will now be described by way of example with reference to the accompanying scanning electron microscope (SEM) images in which:
Figures 1a and 1b show metallographic cross-sections of a component formed of CM247LC using an ALM method and a prior art compressive stress/HIP processing treatment;
Figures 2a and 2b show a comparison of the surface of an ALM manufactured CM247LC component prior to and post-surface finishing by grit blasting according to an embodiment of the second aspect;
Figures 3a and 3b shows a recrystallized layer with a fine grain structure obtained during grit blasting according to an embodiment of the second aspect;
Figure 4 shows serrated grain boundaries obtained using the HIP and solution heat treatment steps according to the first aspect of the present invention; and
Figure 5 shows cuboidal morphology of γ' precipitates after the primary and secondary aging steps according to the third aspect of the present invention.

### Detailed Description and Further Optional Features of the Invention

A turbine or compressor component such as a blade or stator for use in a gas turbine aero-engine is manufactured using an ALM method in which a layer of powdered CM247LC having a particle size of between 15 and 60 µm (microns) is deposited on a base plate and fused into a 2D first fused layer using a scanning laser beam to melt and fuse the powdered CM247LC. Next a second layer of powdered CM247LC is deposited on the first fused layer and fused into a 2D second fused layer using the scanning laser beam, the second fused layer being fused to the first fused layer.

The deposition and fusing of powdered CM247LC is repeated until the desired 3D component is formed from the 2D layers.

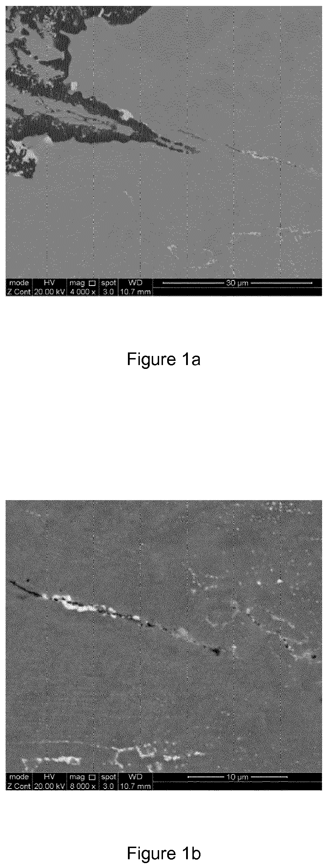

The component is first processed using a surface finishing step which is applied to reduce the extent of surface asperities which arise as a result of semi-fused powdered CM247LC. If not reduced, the surface asperities act as initiation sites for stress-assisted oxidation during subsequent HIP of the component which results in crack formation. Figure 1a shows a metallographic cross-section through a CM247LC component formed through ALM and then subjected to HIP (without the reduction of surface asperities). It can be seen that a crack has initiated from a fissure in the component surface and has grown as a result stress-assisted oxidation during HIP. Although the vessel used for HIP is typically filled with an inert gas such as argon, low (permitted) levels of oxygen are typically present thus allowing the oxidative process. Figure 1b shows the oxidation and void formation ahead of the crack tip under high resolution.

The surface finishing step also acts to clean the component of loose powdered CM247LC.

The surface finishing comprises grit blasting using alumina particles having a particle size of approximately 0.18 to 0.063 mm (80-220 mesh) at a pressure of 0.2 to 0.4 MPa (30 to 60 psi). This helps to minimise distortion of the component. The grit is blasted at an angle of 60 to 85 degrees normal to the surface of the component. This has been shown to be effective in removal of surface asperities but reduces compressive stress/cold work on the surface.

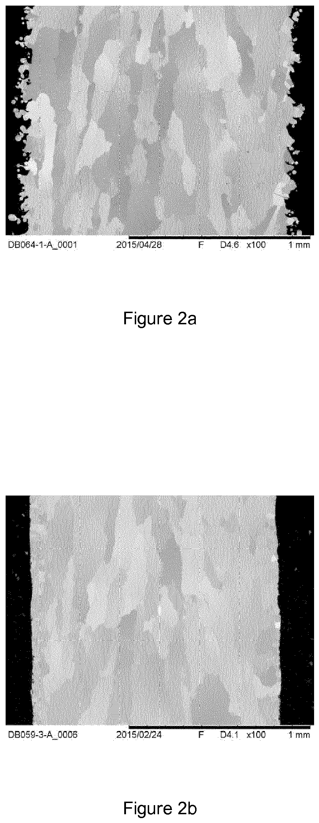

Figures 2a and 2b are component cross sections showing a comparison of the surface of an ALM manufactured CM247LC component prior to and post-surface finishing by grit blasting. It can be seen that the surface asperities are significantly reduced using the grit blasting method of the second aspect of the invention. Figure 2b shows a greatly improved surface finish.

Any portions of the component surface that are not easily accessible e.g. internal bores may be surface finished by abrasive flow machining.

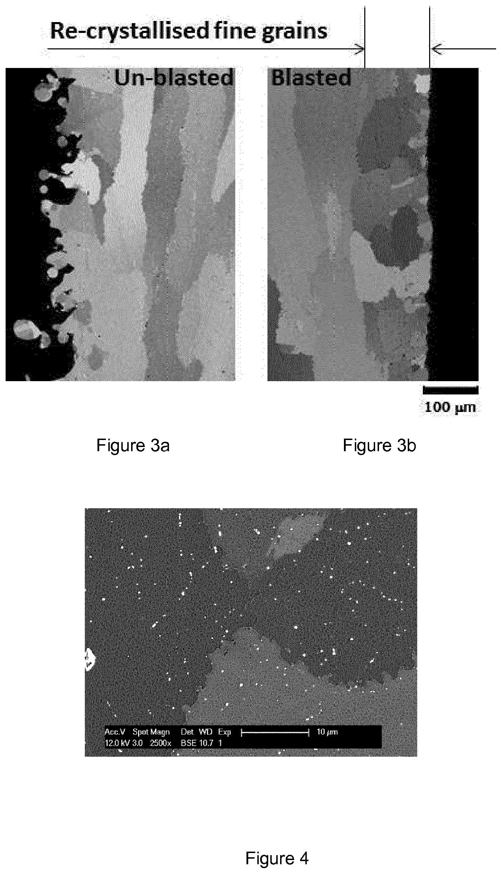

Figures 3 and 3b show cross-sections through the component before surface finishing and after surface finishing according to the method of the second aspect of the present invention. As can be seen in Figure 3b, a recrystallized layer having a fine grain structure is produced at the surface (after subsequent HIP). The depth of this layer (which has found to be non-load bearing) is reduced to approximately 100 µm (microns). Prior art peening processes result in much greater plastic deformation at the surface which increases the depth of the recrystallized layer.

Next, the surface-finished component is subjected to hot isostatic pressing (HIP) at a temperature below the γ' solvus temperature. The HIP is carried out at a temperature of between 1190 and 1230°C over a time period of 1-4 hours at a pressure of 100-150 MPa. The lower end of this pressure range is preferred as this minimises oxygen content which helps minimise stress assisted oxidation. The heating rate is preferably between 50-100°C/min but lower heating rates of the known commercial HIP vessels (e.g. around 3°C/min) may be used.

The inventors have found that hot isostatic pressing of the component at a temperature below the γ' solvus temperature results in the closing of internal abnormalities such as cracks and voids without the risk of incipient melting.

Next the component undergoes solution heat treatment above the γ' solvus temperature i.e. at or above 1260°C for 2 hours but below the solidus temperature (to avoid incipient melting).

The heat solution treatment dissolves the γ' phase and results in a recrystallized and homogenised microstructure with randomly oriented grains. The microstructure obtained has been found to have serrated grain boundaries which are known to improve crack growth resistance of superalloys. The serrated grain boundaries are clearing seen in Figure 4.

The solution heat treatment of the component is followed by a primary aging at a primary aging temperature for a first aging time. The primary aging temperature is 980-1100°C and the primary aging time is around 4 hours.

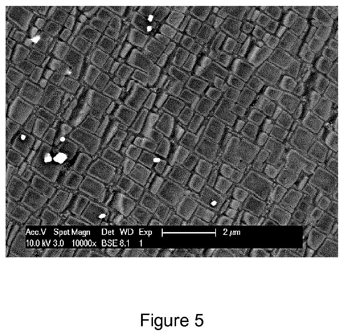

The inventors have found that the primary aging step produces cuboidal γ' precipitates as shown in Figure 5 and which is known to improve creep rupture of nickel superalloys.

Finally, the component is subjected to a secondary aging by cooling to a secondary aging temperature for a second aging time. The secondary aging temperature is 870°C and the secondary aging time is 16-20 hours.

The secondary aging step produces finer γ' precipitates within the matrix formed by the larger cuboidal γ' precipitates. This has been found to increase elevated temperature (>750°C) creep ductility by raising total plastic strain to > 1% at failure.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention as set out in the claims.

## Claims

1. A processing method for processing a component formed by an ALM method using a y'-strengthened superalloy having a γ' solvus temperature, the processing method comprising:
1) surface finishing of the component by blasting with a blasting media at a pressure below 0.62 MPa (90 psi) and/or at an angle less than 85 degrees to the surface of the component;
2) hot isostatic pressing of the component at a temperature 10-70°C below the γ' solvus temperature;
3) solution heat treating the component at a temperature at or above the γ' solvus temperature but below the solidus temperature;
4) primary aging of the component at a primary aging temperature between 950-1120°C for a first aging time; and
5) secondary aging of the component at a secondary aging temperature between 750-980°C for a second aging time, wherein the primary aging temperature is higher than the secondary aging temperature.

2. A processing method according to claim 1 wherein the pressure is 0.2-0.4 MPa (30-60 psi).

3. A processing method according to claim 1 or 2 wherein the angle is 60-65 degrees to the surface of the component.

4. A processing method according to any one of the preceding claims wherein the blasting media has a particle size of 0.063 to 0.18 mm (80-220 mesh).

5. A processing method according to any one of the preceding claims wherein the hot isostatic pressing (HIP) of the component is carried out at a temperature of between 1110 to 1300°C.

6. A processing method according to any one of the preceding claims wherein the first aging time is shorter than the second aging time.

7. A method of manufacturing a component comprising:
manufacturing the component using an ALM method comprising:
depositing a layer of powdered material comprising γ'-strengthened nickel superalloy having a γ' solvus temperature on a base plate and fusing at least a portion of said layer of powdered material using an energy beam to form a first fused layer of the component;
depositing a second layer of powdered material comprising γ'-strengthened nickel superalloy on the first fused layer and fusing at least a portion of said second layer of powdered material using the energy beam to form a second fused layer onto the first fused layer; and
depositing further layers of powdered material comprising γ'-strengthened nickel superalloy on the second/subsequent fused layers and fusing at least a portion of each of said further layers of powdered material using the energy beam to form third and subsequent fused layers of the component until the desired three dimensional component is obtained; and
processing the component using the processing method according to any one of the preceding claims.

8. A method according to claim 7 wherein the powdered material has a particle size of between 15 and 60 µm (microns).

9. A method according to any one of the preceding claims wherein the component is a turbine or compressor component for use in a gas turbine aero-engine.

## Patentansprüche

1. Bearbeitungsverfahren zur Bearbeitung einer durch ein ALM-Verfahren hergestellten Komponente unter Verwendung einer y'-verfestigten Superlegierung mit einer y'-Solvustemperatur, wobei das Bearbeitungsverfahren umfasst:
1) Oberflächenendbearbeitung der Komponente durch Strahlen mit einem Strahlmittel bei einem Druck unterhalb von 0,62 MPa (90 psi) und/oder unter einem Winkel von weniger als 85 Grad zur Oberfläche der Komponente;
2) heißisostatisches Pressen der Komponente bei einer Temperatur 10-70 °C unterhalb der y'-Solvustemperatur;
3) Lösungsglühbehandlung der Komponente bei einer Temperatur von oder oberhalb der y'-Solvustemperatur, aber unterhalb der Solidustemperatur;
4) primäre Alterung der Komponente bei einer primären Alterungstemperatur zwischen 950-1120 °C für eine erste Alterungszeit; und
5) sekundäre Alterung der Komponente bei einer sekundären Alterungstemperatur zwischen 750-980 °C für eine zweite Alterungszeit, wobei die primäre Alterungstemperatur höher als die sekundäre Alterungstemperatur ist.

2. Bearbeitungsverfahren nach Anspruch 1, wobei der Druck 0,2-0,4 MPa (30-60 psi) beträgt.

3. Bearbeitungsverfahren nach Anspruch 1 oder 2, wobei der Winkel 60-65 Grad zur Oberfläche der Komponente beträgt.

4. Bearbeitungsverfahren nach einem der vorhergehenden Ansprüche, wobei das Strahlmittel eine Teilchengröße von 0,063 bis 0,18 mm (Maschenweite 80-220) aufweist.

5. Bearbeitungsverfahren nach einem der vorhergehenden Ansprüche, wobei das heißisostatische Pressen (HIP) der Komponente bei einer Temperatur von zwischen 1110 bis 1300 °C erfolgt.

6. Bearbeitungsverfahren nach einem der vorhergehenden Ansprüche, wobei die erste Alterungszeit kürzer als die zweite Alterungszeit ist.

7. Verfahren zur Herstellung einer Komponente, umfassend:
Herstellen der Komponente unter Verwendung eines ALM-Verfahrens, umfassend:
Abscheiden einer Pulvermaterialschicht umfassend y'-verfestigte Nickel-Superlegierung mit einer y'-Solvustemperatur auf einer Grundplatte und Verschmelzen mindestens eines Abschnitts der Pulvermaterialschicht unter Verwendung eines Energiestrahls, um eine erste Schmelzschicht der Komponente zu bilden;
Abscheiden einer zweiten Pulvermaterialschicht umfassend y'-verfestigte Nickel-Superlegierung auf der ersten Schmelzschicht und Verschmelzen mindestens eines Abschnitts der zweiten Pulvermaterialschicht unter Verwendung des Energiestrahls, um eine zweite Schmelzschicht auf der ersten Schmelzschicht zu bilden; und
Abscheiden weiterer Pulvermaterialschichten umfassend y'-verfestigte Nickel-Superlegierung auf der zweiten/anschließenden Schmelzschichten und Verschmelzen mindestens eines Abschnitts jeder der weiteren Pulvermaterialschichten unter Verwendung des Energiestrahls, um dritte und anschließende Schmelzschichten der Komponente zu bilden, bis die gewünschte dreidimensionale Komponente erzielt wird; und
Bearbeiten der Komponente unter Verwendung des Bearbeitungsverfahrens nach einem der vorhergehenden Ansprüche.

8. Verfahren nach Anspruch 7, wobei das Pulvermaterial eine Teilchengröße von zwischen 15 und 60 µm (Mikron) aufweist.

9. Verfahren nach einem der vorhergehenden Ansprüche, wobei die Komponente eine Turbinen- oder Kompressorkomponente zur Verwendung in einem Gasturbinenflugzeugtriebwerk ist.

## Revendications

1. Procédé de traitement permettant de traiter un composant formé par un procédé ALM à l'aide d'un superalliage renforcé par Y' présentant une température de solvus Y', le procédé de traitement comprenant :
1) la finition de surface du composant par décapage avec un agent décapant à une pression inférieure à 0,62 MPa (90 psi) et / ou selon un angle inférieur à 85 degrés par rapport à la surface du composant ;
2) la compression isostatique à chaud du composant à une température inférieure de 10 à 70°C à la température de solvus Y' ;
3) le traitement thermique en solution du composant à une température supérieure ou égale à la température de solvus Y' mais inférieure à la température de solidus ;
4) le vieillissement primaire du composant à une température de vieillissement primaire comprise entre 950 à 1120 ° C pendant une première durée de vieillissement ; et
5) le vieillissement secondaire du composant à une température de vieillissement secondaire comprise entre 750 à 980°C pendant une seconde durée de vieillissement, la température de vieillissement primaire étant supérieure à la température de vieillissement secondaire.

2. Procédé de traitement selon la revendication 1, dans lequel la pression vaut de 0,2 à 0,4 MPa (30 à 60 psi).

3. Procédé de traitement selon la revendication 1 ou 2, dans lequel l'angle est de 60 à 65 degrés par rapport à la surface du composant.

4. Procédé de traitement selon l'une quelconque des revendications précédentes, dans lequel l'agent de décapage a une taille de particules de 0,063 à 0,18 mm (80 à 220 mesh).

5. Procédé de traitement selon l'une quelconque des revendications précédentes, dans lequel la compression isostatique à chaud (HIP) du composant est effectué à une température comprise entre 1110 à 1300°C.

6. Procédé de traitement selon l'une quelconque des revendications précédentes, dans lequel la première durée de vieillissement est plus courte que la seconde durée de vieillissement.

7. Procédé de fabrication d'un composant comprenant :
la fabrication du composant à l'aide d'un procédé ALM comprenant :
le dépôt d'une couche de matériau pulvérulent comprenant un superalliage de nickel renforcé par Y' présentant une température de solvus Y' sur une plaque de base et la fusion d'au moins une partie de ladite couche de matériau pulvérulent à l'aide d'un faisceau d'énergie pour former une première couche fondue du composant ;
le dépôt d'une seconde couche de matériau pulvérulent comprenant un superalliage de nickel renforcé par Y' sur la première couche fondue et la fusion d'au moins une partie de ladite seconde couche de matériau pulvérulent à l'aide du faisceau d'énergie pour former une deuxième couche fondue sur la première couche fondue ; et
le dépôt d'autres couches de matériau pulvérulent comprenant un superalliage de nickel renforcé par Y' sur la seconde couche/les couches fondues suivantes et la fusion d'au moins une partie de chacune desdites couches supplémentaires de matériau pulvérulent à l'aide du faisceau d'énergie pour former une troisième couche fondue et les couches fondues suivantes du composant jusqu'à obtention du composant tridimensionnel souhaité ; et
le traitement du composant à l'aide du procédé de traitement selon l'une quelconque des revendications précédentes.

8. Procédé selon la revendication 7, dans lequel le matériau pulvérulent a une taille de particules comprise entre 15 et 60 µm (microns).

9. Procédé selon l'une quelconque des revendications précédentes, dans lequel le composant est un composant de turbine ou de compresseur destiné à être utilisé dans un moteur aéronautique à turbine à gaz.
